# EUROPÄISCHE PATENTANMELDUNG

(11) **EP 0 967 119 A2**
(43) Veröffentlichungstag der Anmeldung: **29.12.1999**
(21) Anmeldenummer: 99111258.2
(22) Anmeldetag: 10.06.1999
(51) Int. Cl.: B60R 9/04

(54) **Fahrzeugdach**

(30) Priorität: 25.06.1998 DE 19828234
(71) Anmelder: Germann, Harald, 74177 Bad Friedrichshall (DE)
(72) Erfinder: Germann, Harald, 74177 Bad Friedrichshall (DE)
(74) Vertreter: Clemens, Gerhard, Dr.-Ing.

(57) **Zusammenfassung**

Ein Fahrzeug (10) mit einem Fahrzeugdach (12) ist dadurch gekennzeichnet, dass dachseits aus-/einfahrbare Befestigungseinheiten (20; 30) vorhanden sind mit Anschlusseinheiten zum lösbaren Befestigen von Tragprofilelementen (14).

## Beschreibung

### TECHNISCHES GEBIET

Die vorliegende Erfindung betrifft ein Fahrzeug mit einem Fahrzeugdach.

### STAND DER TECHNIK

Zum Transport von großen, sperrigen Gegenständen mit Fahrzeugen, insbesondere Personenkraftwagen, ist es bekannt, auf dem Fahrzeugdach sogenannte "Dachgepäckträger" anzuordnen, die sich beispielsweise an den oberen Dachrand klammern oder an vorhandenen Dachrelingeinheiten anschließbar sind. Die Montage derartiger Dachgepäckträgereinheiten ist relativ aufwendig, wobei insbesondere Beschädigungen des Lackes des Fahrzeugs durch die Montage nicht auszuschließen sind.

### DARSTELLUNG DER ERFINDUNG

Ausgehend von dem genannten Stand der Technik liegt der vorliegenden Erfindung die Aufgabe beziehungsweise das technische Problem zugrunde, ein Fahrzeug anzugeben, bei dem die erforderlichen Montagearbeiten zur Schaffung der Befestigungsmöglichkeit von zu transportierendem, sperrigen Gut verringert werden, insbesondere die Montage vereinfacht wird und Lackbeschädigungen weitestgehend vermieden werden können.

Das erfindungsgemäße Fahrzeug ist durch die Merkmale des unabhängigen Anspruchs 1 gegeben. Vorteilhafte Ausgestaltungen und Weiterbildungen sind Gegenstand der abhängigen Ansprüche.

Das erfindungsgemäße Fahrzeug zeichnet sich demgemäß dadurch aus, dass dachseits aus-/einfahrbare Befestigungseinheiten vorhanden sind, an denen Tragprofilelemente lösbar anschließbar sind. Durch die ausfahrbaren Befestigungseinheiten sind die Anschlusspunkte für die Tragprofilelemente klar definiert. Die Montage der Profilelemente kann in einfacher Art und Weise erfolgen. An den Profilelementen können dann die sperrigen Gegenstände, wie Leitern, Skibox oder dergleichen, in einfacher Art und Weise problemlos befestigt werden.

Eine bevorzugte Ausgestaltung zeichnet sich dadurch aus, dass insgesamt vier Befestigungseinheiten vorhanden sind, die in einer Draufsicht gesehen in den Eckpunkten eines Rechtecks am Fahrzeugdach angeordnet sind.

Es hat sich als günstig herausgestellt, die Befestigungseinheiten oberhalb der A- und C-Säule des Fahrzeugs anzuordnen, da in diesem Bereich größere Volumen zur Unterbringung der Befestigungseinheiten vorhanden sind.

Eine besonders bevorzugte Weiterbildung zeichnet sich dadurch aus, dass die Befestigungseinheiten vertikal ausfahrbar, insbesondere teleskopierbar ausgebildet sind.

Alternativ können die Befestigungseinheiten gemäß einer weiteren Ausgestaltung um eine Achse klappbar ausgebildet sein, derart, dass sie aus der Dachhimmelebene um diese Achse herausgeschwenkt werden können, wobei eine Arretierung im herausgeschwenkten Zustand gegeben ist.

Besonders vorteilhaft ist es, an den Befestigungseinheiten jeweils eine Schlosseinheit vorzusehen, die das jeweils angeschlossene Tragelement sichert.

Die Betätigung der Befestigungseinheiten kann entweder manuell erfolgen oder in besonders komfortabler Art und Weise über Antriebsaggregate, die beispielsweise vom Inneren des Fahrzeuges aus oder über einen Zündschlüssel ansteuerbar sind.

Weitere Ausführungsformen und Vorteile der Erfindung ergeben sich durch die in den Ansprüchen ferner aufgeführten Merkmale sowie durch die nachstehend angegebenen Ausführungsbeispiele. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1: schematische Perspektivdarstellung eines Fahrzeugs, nämlich Personenkraftwagens, mit aus dem Fahrzeugdach ausgefahrenen Befestigungseinheiten und angeschlossenen Tragprofilelementen,
- Fig. 2a,b: schematischen Ausschnitt aus dem Dachbereich mit einer um eine Achse aus der Dachebene herausklappbaren Befestigungseinheit und
- Fig. 3a,b: schematischen Ausschnitt aus dem Dachbereich mit einer aus der Dachebene vertikal herausschiebbarer Befestigungseinheit.

### WEGE ZUM AUSFUHREN DER ERFINDUNG

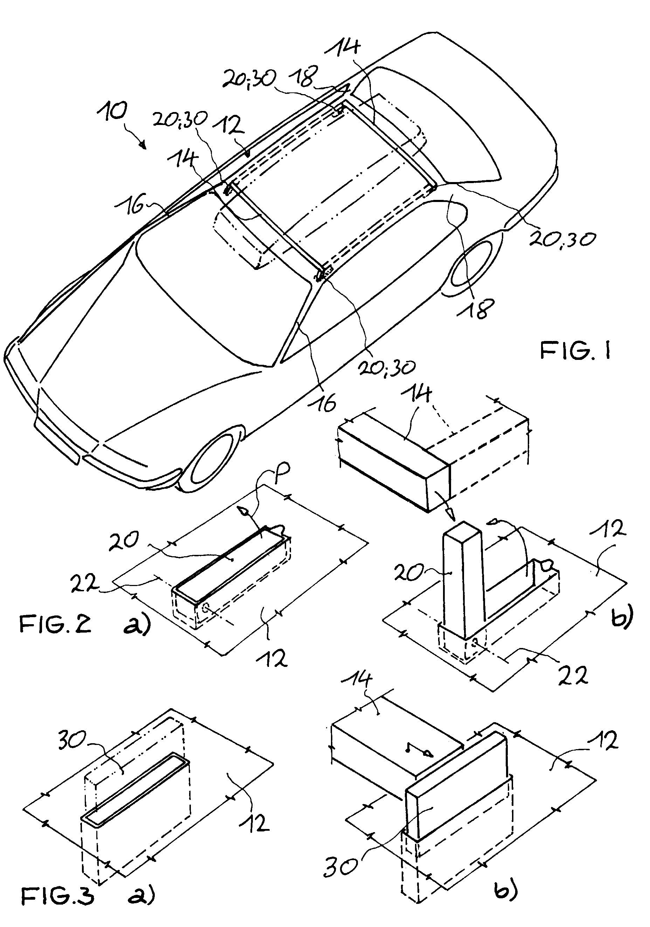

Das in Fig. 1 dargestellte Fahrzeug 10 besitzt ein Fahrzeugdach 12, das über die sogenannte A-Säule 16 im vorderen und C-Säule 18 zu beiden Seiten mit der übrigen Karosserie verbunden ist. Oberseitig sind im Bereich der vier Eckpunkte des Fahrzeugdaches 12 aus dem Fahrzeugdach 12 herausfahrbare Befestigungseinheiten 20; 30 vorhanden.

In den Figuren 2a und 2b ist stark schematisiert eine erste Ausführungsform einer Befestigungseinheit 20 dargestellt. Dabei handelt es sich um eine um eine Achse 22 aus der Ebene des Fahrzeugdaches 12 herausklappbare Befestigungseinheit 20 (Pfeil P). An die herausgeklappte Befestigungseinheit 20 (Fig. 2b) kann problemlos ein in Fig. 2b schematisiert dargestelltes Tragprofilelement 14 angeschlossen werden, wobei die konstruktive Ausbildung des Anschlusses in Fig. 2b nicht näher dargestellt ist.

Eine weitere Ausführungsform einer Befestigungseinheit 30 ist in den Figuren 3a und 3b dargestellt. Diese Befestigungseinheit 30 kann im wesentlichen in vertikaler Richtung aus dem Fahrzeugdach 12 ausgefahren werden.

In ausgefahrenem Zustand sind die Befestigungseinheiten 20; 30 in ihrer Lage fixiert.

Mit den ausfahrbaren Befestigungseinheiten ist eine äußerst einfache und problemlose Montage einer Tragkonstruktion als Basis für den Transport von sperrigen Gütern möglich. Die Tragprofilelemente können problemlos im Kofferraum eines Fahrzeugs raumsparend untergebracht werden und bedarfsweise in einfacher und schneller Art an die dann ausgefahrenen Befestigungseinheiten angeschlossen werden.

## Patentansprüche

1. Fahrzeug (10) mit einem Fahrzeugdach (12),
**dadurch gekennzeichnet,** dass
- dachseits aus-/einfahrbare Befestigungseinheiten (20;30) vorhanden sind mit Anschlusseinheiten zum lösbaren Befestigen von Tragprofilelementen (14).

2. Fahrzeug nach Anspruch 1,
**dadurch gekennzeichnet,** dass
- insgesamt vier Befestigungseinheiten (20; 30) vorhanden sind, die in einer Draufsicht gesehen in den Eckpunkten eines Rechtecks am Fahrzeugdach (12) angeordnet sind.

3. Fahrzeug nach Anspruch 2,
**dadurch gekennzeichnet,** dass
- die Befestigungseinheiten oberhalb der A- und C-Säule (16; 18) des Fahrzeugs (10) vorhanden sind.

4. Fahrzeug nach einem oder mehreren der vorstehenden Ansprüche,
**dadurch gekennzeichnet,** dass
- die Befestigungseinheiten (30) im wesentlichen vertikal ausfahrbar vorhanden sind.

5. Fahrzeug nach Anspruch 4,
**dadurch gekennzeichnet,** dass
- die Befestigungseinheiten teleskopierbar ausgebildet sind.

6. Fahrzeug nach einem oder mehreren der Ansprüche 1 bis 3,
**dadurch gekennzeichnet,** dass
- die Befestigungseinheiten (20) um eine Achse (22) klappbar ausgebildet sind.

7. Fahrzeug nach einem oder mehreren der vorstehenden Ansprüche,
**dadurch gekennzeichnet,** dass
- die Tragprofilelemente (14) quer und/oder längs zur Fahrtrichtung des Fahrzeugs (10) an den Befestigungseinheiten (20: 30) befestigbar sind.

8. Fahrzeug nach einem oder mehreren der vorstehenden Ansprüche,
**dadurch gekennzeichnet,** dass
- die Befestigungseinheiten in eingefahrenem Zustand jeweils von einer Abdeckeinheit abgedeckt sind.

9. Fahrzeug nach einem oder mehreren der vorstehenden Ansprüche,
**dadurch gekennzeichnet,** dass
- an den Befestigungseinheiten Schloßeinheiten zur Sicherung der angeschlossenen Tragelemente vorhanden sind.

10. Fahrzeug nach einem oder mehreren der vorstehenden Ansprüche,
**dadurch gekennzeichnet,** dass
- die Befestigungseinheiten manuell aus-/einfahrbar sind.

11. Fahrzeug nach einem oder mehreren der Ansprüche 1 bis 9,
**dadurch gekennzeichnet,** dass
- die Befestigungseinheiten über Aggregate aus-/einfahrbar sind, die vom Fahrzeuginneren her oder über einen Zündschlüssel ansteuerbar sind.

12. Fahrzeug nach einem oder mehreren der vorstehenden Ansprüche,
**dadurch gekennzeichnet,** dass
- der Ausfahrweg der Befestigungseinheiten im Bereich zwischen 5 bis 20 cm (Zentimeter) liegt.
